# EUROPÄISCHE PATENTSCHRIFT

(11) **EP 3 704 573 B1**
(45) Veröffentlichungstag und Bekanntmachung des Hinweises auf die Patenterteilung: **25.08.2021**
(21) Anmeldenummer: 19722822.4
(22) Anmeldetag: 29.04.2019
(51) Int. Cl.: G06F 8/65, G06N 20/00

(54) **VERFAHREN ZUM DURCHFÜHREN EINES SOFTWAREUPDATES IN EINEM STEUERGERÄT EINES KRAFTFAHRZEUGS SOWIE ENTSPRECHEND EINGERICHTETES KRAFTFAHRZEUG**
METHOD FOR PERFORMING A SOFTWARE UPDATE IN A CONTROL UNIT OF A MOTOR VEHICLE, AND MOTOR VEHICLE DESIGNED ACCORDINGLY
PROCÉDÉ POUR LA RÉALISATION D'UNE MISE À JOUR DE LOGICIEL DANS UN APPAREIL DE COMMANDE D'UN VÉHICULE À MOTEUR AINSI QUE VÉHICULE À MOTEUR AINSI AMÉNAGÉ

(30) Priorität: 02.05.2018 DE 102018206720
(43) Veröffentlichungstag der Anmeldung: 09.09.2020
(73) Patentinhaber: Audi AG, 85045 Ingolstadt (DE)
(72) Erfinder: THURIMELLA, Anil, 80995 München (DE)
(86) Internationale Anmeldenummer: PCT/EP2019/060966
(87) Internationale Veröffentlichungsnummer: WO 2019/211247

(56) Entgegenhaltungen:
- US-A1- 2011 307 882
- US-A1- 2015 301 822

## Beschreibung

Die Erfindung betrifft ein Verfahren zum Durchführen eines Softwareupdates in einem Steuergerät eines Kraftfahrzeugs. Mittels des Verfahrens kann das Softwareupdate insbesondere während eines Fahrbetriebs des Kraftfahrzeugs durchgeführt werden. Zu der Erfindung gehört auch ein Kraftfahrzeug, welches das erfindungsgemäße Verfahren durchführen kann.

In einem Kraftfahrzeug kann es erwünscht sein, Software eines Steuergeräts des Kraftfahrzeugs in einem Softwareupdate zu erneuern oder neue, zusätzliche Software neu zu installieren, um hierdurch den Funktionsumfang des Steuergeräts zu erweitern und/oder zu verbessern und/oder zu korrigieren. In Bezug auf die Erfindung ist insbesondere vorgesehen, dass das Kraftfahrzeug über eine Funkverbindung mit einer Backendvorrichtung gekoppelt ist. Das Kraftfahrzeug meldet sich bei der Backendvorrichtung an, um sich zu authentifizieren und zu autorisieren. Danach kann das Softwareupdaten über die Funkverbindung durchgeführt werden (sogenanntes Online- Softwareupdate). Eine Backendvorrichtung kann jeweils ein Server (Internetserver / Servervorrichtung), ein Computerzentrum (computer center), ein Computercluster, ein Clouddienst oder ein verteiltes und dezentrales Rechenzentrum sein.

Im Zusammenhang mit der Erfindung kann ein Softwareupdate beispielhaft die folgenden Szenarien umfassen. Ein Benutzer eines Kraftfahrzeug mit einer vorgegebenen Nennleistung (z.B. 105 PS) kann die Nennleistung auf einen höheren Nennwert einstellen (z.B. 150 PS). Dazu kann ein Softwareupdate in der Motorsteuergerät durchgeführt werden. Auch bei Programmierfehlern kann in einem Steuergerät eines Kraftfahrzeugs die fehlerhafte Software per Softwareupdate ausgetauscht werden.

Aus der DE 10 2015 014 049 A1 ist hierzu bekannt, dass abgewartet wird, bis sich das Kraftfahrzeug in einer Parkphase (das heißt nicht im Fahrbetrieb) befindet, um dann Programmdaten oder Softwaredaten aus dem Internet zu empfangen und in einem Steuergerät des Kraftfahrzeugs zu installieren. Durch das Abwarten einer Parkphase soll sichergestellt werden, dass während des Softwareupdates (Softwareupdate) das Steuergerät garantiert nicht benötigt wird. Würde das Steuergerät während des Softwareupdates nämlich benötigt, könnte es nicht die von ihm erwarteten Steuerdaten bereitstellen, da seine Software gerade ausgetauscht wird. Allerdings erfordert das Abwarten einer Parkphase, dass ein Softwareupdate nur zu sporadischen Zeitpunkten ermöglicht ist.

Auch aus der DE 10 2011 088 320 A1 ist bekannt, dass man für ein Softwareupdate zunächst einen Update-Zustand abwarten sollte, der darin besteht, dass in dem Kraftfahrzeug ausreichend elektrische Energie durch eine Batterie bereitgestellt werden kann und das Kraftfahrzeug geparkt ist. Auch hier ist es somit unmöglich, dass ein Softwareupdate während eines Fahrbetriebs des Kraftfahrzeugs durchgeführt wird.

Aus der DE 10 2015 007 493 A1 ist bekannt, dass man mittels einer Methode des maschinellen Lernens ein Betriebsverhalten eines Kraftfahrzeugs modellieren oder erlernen kann, um eine Aussage über das Betriebsverhalten des Kraftfahrzeugs machen zu können.

In einem Fachbeitrag von Jason Cong (Jason Cong, "Machine Learning on FPGAs", http://cadlab.cs.ucla.edu/~cong/slides/HAL015_keynote.pdf) ist beschrieben, wie maschinelles Lernen mittels eines FPGA (Field programmable gate array) optimiert werden kann. Zudem sind weitere Optimierungsmöglichkeiten auf Prozessorebene und Serverebene/Backendebene genannt.

Aus der US2011/307882 A1 ist bekannt, wie, aufgrund von historischen Daten, der optimale Softwareupdatezeitraum vorhergesagt werden kann, in dem das Fahrzeug gerade höchstwahrscheinlich nicht benutzt wird.

Aus der US2015/301822 A1 ist bekannt, wie Softwareupdates durchgeführt werden können, während das Fahrzeug fährt, basierend auf der Ermittlung eines nicht zu hohen Datenverkehrs am Datenbus.

Der Erfindung liegt die Aufgabe zugrunde, in einem Steuergerät eines Kraftfahrzeugs ein Softwareupdate durchzuführen.

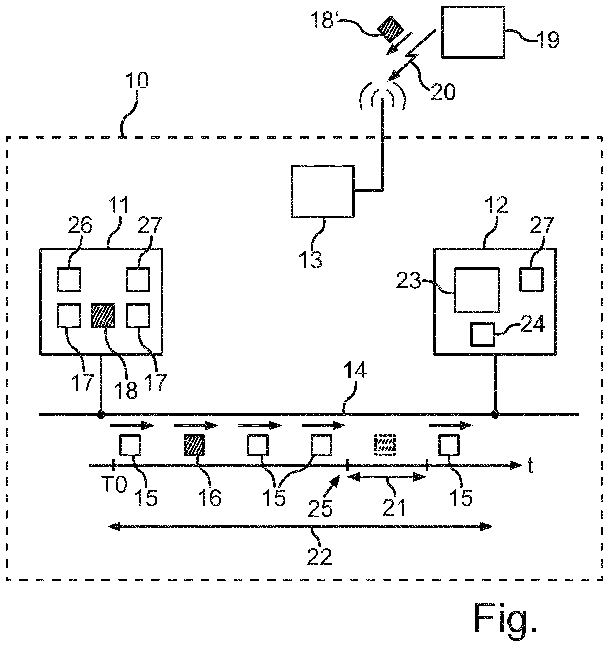

Die Aufgabe wird durch die Gegenstände der unabhängigen Ansprüche gelöst. Vorteilhafte Ausführungsformen der Erfindung sind durch die abhängigen Patentansprüche, die folgende Beschreibung sowie die Figur beschrieben.

Durch die Erfindung ist ein Verfahren zum Durchführen eines Softwareupdates in einem Steuergerät eines Kraftfahrzeugs bereitgestellt. Während eines Fahrbetriebs des Kraftfahrzeugs wird ein Steuergerät betrieben, das hierdurch Steuerdaten erzeugt. Die Steuerdaten werden durch zumindest ein Softwaremodul des Kraftfahrzeugs erzeugt. Ein Softwaremodul stellt jeweils eine Steuerfunktion oder mehrere Steuerfunktionen bereit. Während des Fahrbetriebs wird nun durch eine Analyseeinrichtung des Kraftfahrzeugs für ein vorbestimmtes zukünftiges Zeitintervall, in welchem das Steuergerät zum Erzeugen der Steuerdaten betrieben wird, ein Ruheintervall ermittelt. Durch den Steuergerät wird also betrieben, damit es bei Bedarf Steuerdaten erzeugt. Es muss dabei aber nicht durchgehend während des gesamten Zeitintervalls auch tatsächlich Steuerdaten erzeugen. Das Ruheintervall zeichnet sich nämlich dadurch aus, dass das Erzeugen der Steuerdaten zumindest eines Softwaremoduls des Steuergeräts während des Fahrbetriebs mindestens für eine vorbestimmte Mindestzeitdauer aufgrund eines dann vorliegenden Fahrzeugzustands unterbrochen ist. Das Steuergerät wird also weiterhin betrieben, aber zumindest ein Softwaremodul wird in dem Ruheintervall voraussichtlich nicht zum Erzeugen von Steuerdaten genutzt, weil der Fahrzeugzustand es nicht erfordert.

Das Ruhezeitintervall wird durch die erste Analyseeinrichtung prädiziert, das heißt es ist schon im Voraus bekannt, wann zukünftig das Ruhezeitintervall beginnen wird und wie lange es mindestens dauern wird. Zu Beginn des Ruhezeitintervalls wird dann das Softwareupdate gestartet. Da durch die Prädiktion bekannt ist, dass das Ruhezeitintervall mindestens die vorbestimmte Mindestzeitdauer andauern wird, also das zumindest eine Softwaremodul des Steuergeräts währenddessen keine Steuerdaten erzeugen muss, ist für dieses Ruhezeitintervall das Softwareupdate für das zumindest eine Softwaremodul möglich. Das Softwareupdate kann somit während des Fahrbetriebes, also insbesondere während das Kraftfahrzeug rollt und/oder ein Motor des Kraftfahrzeugs im Betrieb ist, durchgeführt werden. Das Steuergerät kann währenddessen zum Erzeugen der Steuerdaten betrieben werden. In einem zukünftigen Zeitintervall während des Betriebs des Steuergeräts, also beispielsweise für die nächsten zehn Minuten oder die nächste Stunde oder allgemein für ein Zeitintervall der Dauer von zehn Sekunden bis einer Stunde, wird dann in dem Zeitintervall das Ruhezeitintervall prädiziert. Das Ruhezeitintervall stellt also einen Zeitslot während des Fahrbetriebes dar, in welchem in dem Steuergerät zumindest ein Softwaremodul keine Steuerdaten erzeugen muss. Diese Unterbrechung der Erzeugung der Steuerdaten bei zumindest einem Softwaremodul kann genutzt werden, um für dieses zumindest eine Softwaremodul ein Softwareupdate durchzuführen, also z.B. eine Softwareerneuerung oder eine Softwareerweiterung (Neuinstallation).

Durch die Erfindung ergibt sich der Vorteil, dass bei dem Kraftfahrzeug kein Standby-Modus des Steuergeräts nötig ist, also beispielsweise keine Parkphase. Im Betrieb des Steuergeräts wird zumindest ein Ruhezeitintervall detektiert, in welchem zumindest ein Softwaremodul des Steuergeräts aktuell nicht benötigt wird und somit in eines Softwareupdates ausgetauscht oder aktualisiert werden kann.

Ein weiterer Vorteil des vorgeschlagenen Softwareupdates ist die hohe Energieeffizienz, die darin begründet liegt, dass es schnell während einer Fahrt und/oder während der Laufzeit des Kraftfahrzeugs durchgeführt werden kann. Wenn das Softwareupdate während der Laufzeit durchgeführt wird, besteht kein Bedarf, das Kraftfahrzeug ausschließlich für das Softwareupdate in Betrieb zu nehmen. Das Kraftfahrzeug muss auch nicht für längere Zeit laufen gelassen werden, nur um ein Softwareupdate durchzuführen oder abzuschließen. All dies trägt zur Energieeffizienz bei.

Zu der Erfindung gehören auch Ausführungsformen, durch die sich zusätzliche Vorteile ergeben.

Eine Ausführungsform sieht vor, dass zum Erkennen des Ruhezeitintervalls anhand von Betriebsdaten ermittelt wird, welche Steueraufgaben (sogenannte Jobs) an das Steuergerät übermittelt werden und/oder welche andere Fahrzeugkomponente des Kraftfahrzeugs das zumindest eine Softwaremodul des Steuergeräts anfordert. Es wird also ermittelt, wann man und/oder wer das zumindest eine Softwaremodul des Steuergeräts benötigt. In einem Zeitraum, in welchem das zumindest eine Softwaremodul nicht benötigt oder angefragt wird, ergibt sich somit ein Ruhezeitintervall. Die hierzu genutzten Betriebsdaten können z.B. Kommunikationsdaten aus einem Kommunikationsbus, z.B. einem CAN-Bus (CAN - Controller Area Network) oder einem Flexray-Bus oder einem MOST-Bus (Media Oriented Systems Transport), und/oder aus einem Ethernet-Netzwerk umfassen.

Eine Ausführungsform sieht vor, dass mehrere Softwaremodule des Steuergeräts jeweils als eigenständiges Softwaremodul bereitgestellt sind und das Softwareupdate umfasst, dass für zumindest eines der Softwaremodule ein Einzel-Softwareupdate unabhängig von jedem übrigen der Softwaremodule durchgeführt wird. Als Mindestzeitdauer wird dann eine Updatedauer für eines der Softwaremodule zugrundegelegt. Es muss also nicht die vollständige Software des Steuergeräts en bloc oder im Ganzen bei des Softwareupdates ausgetauscht oder verändert werden. Durch den modularen Aufbau kann das Softwareupdate auch modulweise, das heißt für jedes Softwaremodul einzeln, durchgeführt werden. Es kann also jedes Softwaremodul unabhängig von jedem anderen Softwaremodul einzeln ausgetauscht oder erneut werden. Das Ruhezeitintervall wird dann für eine Mindestzeitdauer ermittelt, die ausreicht, um ein einzelnes Softwaremodul zu erneuern oder auszutauschen. Es wird dann natürlich ein solches Softwaremodul ausgetauscht oder ein Softwareupdate durchgeführt, das keine Steuerdaten in dem Ruhezeitintervall erzeugt. Es wird also in dem Steuergerät embedded Software und/oder Software basierend auf Mikrokomponenten und/oder Mikrofunktionen (d.h. die Softwaremodule) bereitgestellt, die unabhängig voneinander per Softwareupdate ausgetauscht werden können. Ein Softwareupdate einer solchen Mikrokomponente benötigt weniger Zeit als ein Softwareupdate einer monolytischen Gesamtsoftware. Da auch das Ruhezeitintervall nur für eine Mikrokomponente, d.h. für ein einzelnes Softwaremodul, gefunden werden muss, ergeben sich mehr Möglichkeiten für ein Softwareupdate, da das Ruhezeitintervall kürzer ausfallen kann. Die Mikrokomponenten können gemeinsam eine Gerätefunktion realisieren. Durch diese Aufteilung einer Gerätefunktion ein einzelne, unabhängige Softwaremodule (Mikrokomponenten) und/oder das vorsehen mehrere Softwarekomponenten in dem Steuergerät kann eine Granularität des Softwareupdates eingestellt werden. Die Granularität kann insbesondere auswählbar sein. Insbesondere ist vorgesehen, Mikrodienste und/oder eine dienstorientierte Architektur bereitzustellen, um die embedded Software und/oder Software mit den Mikrokomponenten und/oder Mikrofunktionen bereitzustellen.

Eine Ausführungsform sieht vor, dass die erste Analyseeinrichtung das Ruhezeitintervall auf der Grundlage einer Machine-Learning-Methode (Maschinenlernen) und/oder einer Predictive-Analytics-Methode (Prädiktive Analyse) ermittelt, indem anhand von historischen Betriebsdaten des Kraftfahrzeugs zumindest ein Fahrbetriebsmuster des Kraftfahrzeugs ermittelt und das zumindest eine Fahrbetriebsmuster zum Erkennen des Ruhezeitintervalls wieder erkannt wird. Mit anderen Worten werden mittels der Machine-Learning-Methode eine Zustandsfolge des Steuergeräts und/oder ein zeitlicher Verlauf der Steuerdaten beobachtet, was die historischen Betriebsdaten darstellt. Jedes Fahrbetriebsmuster beschreibt hierbei eine typische Abfolge oder einen typischen Verlauf, wie er mehrfach in dem Kraftfahrzeug beobachtet worden ist. Wird dann mittels der Machine-Learning-Methode der Beginn eines Fahrbetriebsmusters wiedererkannt, so kann anhand des restlichen, im Voraus bekannten Verlaufs des Fahrbetriebsmusters prädiziert werden, wie sich das Kraftfahrzeug, insbesondere das Steuergerät, zukünftig verhalten wird. Zeigt das Fahrbetriebsmuster dabei ein Ruhezeitintervall an oder enthält das Fahrbetriebsmuster ein Ruhezeitintervall, so kann dies mittels des Fahrbetriebsmusters prädiziert werden. Die Machine-Learning-Methode kann auf der Grundlage eines künstlichen neuronalen Netzwerks und/oder eines Bayes-Schätzers und/oder eines Hidden-Markov-Modells realisiert werden, um nur Beispiele zu nennen. Die Ausführungsform weist den Vorteil auf, dass historische Betriebsdaten zum Wiedererkennen eines bevorstehenden Ruhezeitintervalls genutzt werden können.

Eine Ausführungsform sieht vor, dass die erste Analyseeinrichtung durch eine von dem Steuergerät verschiedene Überwachungseinrichtung bereitgestellt wird. Das Steuergerät wird also durch die erste Analyseeinrichtung von außen beobachtet. Die Überwachungseinrichtung ermittelt das besagte Ruhezeitintervall anhand von Kommunikationsdaten, die zwischen dem Steuergerät und zumindest einer weiteren Fahrzeugkomponente übertragen werden. Dieses Beobachten von Kommunikationsdaten wird auch als Logging bezeichnet. Die Überwachungseinrichtung kann beispielsweise durch ein anderes Steuergerät oder durch einen Verbund mehrerer Steuergeräte realisiert sein. Die Ausführungsform weist den Vorteil auf, dass ein auf das Steuergerät einwirkender äußerer Einfluss durch die Überwachungseinrichtung berücksichtigt werden kann. Ein Beispiel einer Predictive-Analytics-Methode ist die logistische Regressionsanalyse (logistic regression analysis).

Eine Ausführungsform sieht vor, dass eine zweite Analyseeinrichtung in dem Steuergerät oder innerhalb des Steuergeräts bereitgestellt wird und die zweite Analyseeinrichtung zukünftig angeforderte Berechnungsaufgaben in dem Steuergerät prädiziert und diese Berechnungsaufgaben vor ihrer jeweiligen Anforderung vorgezogen durchgeführt werden und hierdurch eine das Ruhezeitintervall vergrößerte Idle-Zeit des Steuergeräts bereitgestellt wird. Eine Idle-Zeit ist ein Zeitraum, in welchem in dem Steuergerät keine Berechnungsaufgaben durch ein vorbestimmtes Softwaremodul durchgeführt werden müssen. Das Softwaremodul ist dann idle (unbeschäftigt). Indem diejenigen Intervalle, in welchen Rechnungsaufgaben ausgeführt werden müssen, zeitlich zusammengezogen oder vorgezogen werden, entsteht am Ende aller fertig berechneten Berechnungsaufgaben eine Idle-Zeit, die als Ruhezeitintervall genutzt werden kann, das heißt für das Softwareupdate zur Verfügung steht. Indem aber die Berechnungszeitintervalle, in welchen Berechnungsaufgaben durchgeführt werden, zeitlich vorgeschoben oder vorgezogen werden, steht dennoch stets das Berechnungsergebnis für jede Berechnungsaufgabe zum dann anfallenden Anforderungszeitpunkt bereit. Dieses Vorziehen von Berechnungsaufgaben kann auf einer oder mehreren unterschiedlichen Ebenen des Steuergeräts (Hardwareebene, Betriebssystemebene, Diensteebene) durchgeführt werden. Es kann also beispielsweise auf der Hardwareebene in einem FPGA dieses Vorziehen von Berechnungsaufgaben implementiert sein, das heißt die zweite Analyseeinrichtung realisiert sein. Es kann auch durch eine Software eines Betriebssystems (OS - Operating System) eine zweite Analyseeinrichtung realisiert sein. Auch eine Middleware (Unterstützungssoftware beispielsweise für die Kommunikation zwischen Prozessen und/oder Steuergeräten) kann eine zweite Analyseeinrichtung bereitstellen. Die Ausführungsform weist den Vorteil auf, dass aktiv ein Ruhezeitintervall geschaffen werden kann. Der Hauptvorteil der zweiten Analyseeinrichtung ist die Beschleunigung der Durchführung des Softwareupdates. Die erste und die zweite Analyseeinrichtung zusammen und die Unterteilung in unabhängige Softwaremodule (Mikrokomponenten) verbessern die Performanz bei einem Softwareupdate. Solche schnellen Softwareupdates können auch zu neuen Geschäftsmodellen führen und/oder Anwendungsfällen führen. So kann z.B. in der eingangs beschriebenen Weise ein Benutzer die Nennleistung des Motors seines Kraftfahrzeugs per Softwareupdate verändern. Die Veränderung des Funktionsumfangs des Kraftfahrzeugs per Softwareupdate kann auch auf einen vorbestimmten Zeitraum begrenzt sein. Der Funktionsumfang kann z.B. auf einen Mietzeitraum begrenzt sein, während welchem ein Benutzer das Kraftfahrzeug mietet. Das Kraftfahrzeug wird somit zum mobilen Container, dessen Funktionsumfang per Softwareupdate umgestellt z.B. in Abhängigkeit von Mietvertragsdaten werden kann, z.B. innerhalb von wenigen Minuten.

Eine Ausführungsform sieht vor, dass die zweite Analyseeinrichtung die zukünftig angeforderten Berechnungsaufgaben auf der Grundlage einer Machine-Learning-Methode und/oder Predictive-Analytics-Methode ermittelt. Dies kann in derselben Weise geschehen, wie bereits im Zusammenhang mit der ersten Analyseeinrichtung beschrieben worden ist. Eine Machine-Learning-Methode und/oder Predictive-Analytics-Methode weist den Vorteil auf, dass der spezifische Betriebsablauf in dem Kraftfahrzeug anhand von historischen Berechnungsaufgaben berücksichtigt werden kann. Es kann also beispielsweise ein typisches Fahrerverhalten hierdurch berücksichtigt werden, das Einfluss auf die entstehenden Berechnungsaufgaben (z.B. Fahrdynamikstabilisierung und/oder Trajektorienberechnung) haben kann. Die zweite Analyseeinrichtung kann z.B. auf der eingangs genannten Machine-Learning-Methode für einen FPGA beruhen und/oder auf Betriebssystemebene implementiert sein, um die Performanz eines Chips (Integrierter Schaltkreis) / SOCs (System on Chip) zu steigern. Insbesondere ist eine Implementierung einer Machine-Learning-Methode mit Predictive-Analytics in einem FPGA und/oder auf Betriebssystemebene vorgesehen, also auf niederer Implementierungsebene, um einen Chip und/oder ein SOC für die schnellere Durchführung des Softwareupdates zu beschleunigen.

Eine Ausführungsform sieht vor, dass nach des Softwareupdates eine Schadsoftware-Erkennung mittels einer Minoritätsklassifikation betreffend diejenigen Steuerdaten, die von einem durch das Softwareupdate installierten, neuen Softwaremodul erzeugt werden, durchgeführt wird. Eine Minoritätsklassifikation überprüft, ob die Steuerdaten, die von dem neuen Softwaremodul erzeugt werden, einem oder mehreren vorbestimmten Datenmustern genügen. Fallen die Steuerdaten in keines der Datenmuster, so handelt es sich um untypische Steuerdaten, die als Steuerdaten einer Schadsoftware klassifiziert werden. Entsprechend wird signalisiert, dass Schadsoftware erkannt wurde. Hierdurch ergibt sich der Vorteil, dass nach eines Softwareupdates sichergestellt wird, dass die korrekte oder ein autorisiertes Softwaremodule installiert wurde.

Eine Ausführungsform sieht vor, dass das Softwareupdate eine Erneuerung zumindest eines Softwaremoduls und/oder eine Neuinstallation eines zusätzlichen Softwaremoduls für eine neue Steuerfunktion umfasst. Das Verfahren kann also zum einen für das Erneuern oder Verbessern eines bereits installierten Softwaremoduls verwendet werden. Zusätzlich oder alternativ dazu kann aber auch vorgesehen sein, dass mittels des Verfahrens eine neue Steuerfunktion durch Installieren eines zusätzlichen Softwaremoduls bereitgestellt wird. Ein Softwareupdate ist also im Sinne der Erfindung eine Erneuerung und/oder eine Neuinstallation. Insbesondere ist zumindest eine der folgenden Varianten bevorzugt: Online-Softwareupdate (Backendvorrichtung überträgt Software); Softwareinstallation z.B. mittels USB-Medium (USB - Universal Serial Bus) und/oder CD (Compact Disc); ein Softwareupdate, um einen Fehler auszubessern; ein Softwareupdate, um ein neues Softwaremodul auf dem Steuergerät zu installieren (neue Funktionalität). Ein Softwareupdate kann online (Funkverbindung und/oder Internetverbindung) oder offline (mit portablem Speichermedium) vorgesehen sein.

Zu der Erfindung gehört auch ein Kraftfahrzeug, in welchem das erfindungsgemäße Verfahren durchgeführt werden kann. Mit anderen Worten kann in dem Kraftfahrzeug ein Softwareupdate in einem Steuermodul durchgeführt werden. Das Kraftfahrzeug weist entsprechend das Steuergerät zum Erzeugen der beschriebenen Steuerdaten auf. Eine erste Analyseeinrichtung ist zum Ermitteln eines während eines Fahrbetriebs voraussichtlich eintretenden Ruhezeitintervalls des Steuergeräts bereitgestellt. Das Steuergerät ist insgesamt dazu eingerichtet, eine Ausführungsform des erfindungsgemäßen Verfahrens durchzuführen. Hierzu kann die erste Analyseeinrichtung beispielsweise durch die beschriebene Überwachungseinrichtung bereitgestellt sein. Das erfindungsgemäße Kraftfahrzeug ist insbesondere als Kraftwagen, bevorzugt als Personenkraftwagen oder Lastkraftwagen, ausgestaltet. Die erste Analyseeinrichtung kann auf der Grundlage einer Prozessoreinrichtung realisiert sein, die zumindest einen Mikrocontroller und/oder zumindest einen Mikroprozessor aufweisen kann. Die erste Analyseeinrichtung kann auf der Grundlage eines Programmcodes realisiert sein, der in einem Datenspeicher der Prozessoreinrichtung gespeichert sein kann. Das zumindest eine neue Softwaremodul, das durch das Softwareupdate installiert werden soll, kann in dem Kraftfahrzeug über eine Funkverbindung (zum Beispiel Mobilfunk oder WLAN - Wireless Local Area Network) aus dem Internet und/oder aus einer Backendvorrichtung empfangen werden.

Die Erfindung umfasst auch die Kombinationen der Merkmale der beschriebenen Ausführungsformen.

Im Folgenden sind Ausführungsbeispiele der Erfindung beschrieben. Hierzu zeigt die einzige Figur (Fig.):
Fig. eine schematische Darstellung einer Ausführungsform des erfindungsgemäßen Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Die Figur zeigt ein Kraftfahrzeug 10, bei dem es sich beispielsweise um einen Kraftwagen, insbesondere einen Personenkraftwagen oder Lastkraftwagen, handeln kann. Bei dem Kraftfahrzeug 10 sind ein Steuergerät 11, eine erste Analyseeinrichtung 12, die beispielsweise ebenfalls durch ein Steuergerät realisiert sein kann, eine Kommunikationseinrichtung 13 und ein Kommunikationsbus 14 dargestellt. Das Steuergerät 11 kann Steuerdaten 15, 16 erzeugen, die beispielsweise über den Kommunikationsbus 14 an zumindest ein anderes Steuergerät und/oder an zumindest einen Aktuator und/oder zumindest einen Sensor ausgesendet werden können. Der Kommunikationsbus 14 kann beispielsweise ein CAN-Bus (CAN - Controller Area Network) oder ein Flexray-Bus sein. Zum Erzeugen der Steuerdaten 15, 16 können in dem Steuergerät 11 Softwaremodule 17, 18 vorgesehen sein, die durch eine Prozessoreinrichtung des Steuergeräts 11, beispielsweise zumindest einen Mikroprozessor, ausgeführt werden können. In der Figur ist unterschieden zwischen den Steuerdaten 15 der Softwaremodule 17 und den Steuerdaten 16 des Softwaremoduls 18. Durch jedes Softwaremodul kann jeweils zumindest eine Steuerfunktion des Steuergeräts 11 bereitgestellt werden. Im Folgenden wird Softwaremodul 17, 18 jeweils synonym für die durch das jeweilige Softwaremodul 17, 18 bereitgestellte Steuerfunktion verwendet.

Für das Softwaremodul 18 kann ein Update vorgesehen sein, in dem ein neues oder korrigiertes Softwaremodul 18' von einer Datenquelle 19 bereitgestellt wird. Die Datenquelle 19 kann fahrzeugextern sein und beispielsweise eine Backendvorrichtung des Internets sein. Das neue Softwaremodul 18' kann durch die Kommunikationseinrichtung 13 über eine Funkverbindung 20 empfangen werden. Die Kommunikationseinrichtung 13 kann beispielsweise auf der Grundlage eines Mobilfunkmoduls (zum Beispiel 3G, 4G oder 5G) und/oder eines WLAN-Funkmoduls (WLAN - Wireless Local Area Network) empfangen werden. Das neue Softwaremodul 18' soll das Softwaremodul 18 ersetzen. Hierbei soll aber darauf verzichtet werden, dass zunächst das Steuergerät 11 in einen Standby-Modus geht, also aufhört, Steuerdaten 15, 16 zu erzeugen. Vielmehr soll das Softwareupdate des neuen Softwaremoduls 18' während eines Fahrbetriebs des Kraftfahrzeugs 10 durchgeführt werden.

Dies kann mittels der ersten Analyseeinrichtung 12 realisiert werden. Um die Funktionsweise der ersten Analyseeinrichtung 12 zu veranschaulichen, ist in der Figur über der Zeit t eine zeitliche Abfolge der von dem Steuergerät 11 erzeugten Steuerdaten 15, 16 veranschaulicht. Ein aktueller Zeitpunkt ist als T0 auf dem Zeitstrahl eingetragen. Ausgehend von dem aktuellen Zeitpunkt T0 kann die erste Analyseeinrichtung 12 für ein zukünftiges Zeitintervall 22 prädizieren, welche Steuerdaten 15, 16 durch das Steuergerät 11, insbesondere durch die einzelnen Softwaremodule 17, 18, zukünftig voraussichtlich erzeugt werden. Hierzu kann die erste Analyseeinrichtung 12 eine Predictive-Analytics-Methode und/oder eine Machine-Learning-Methode 23 verwenden. Diese kann beispielsweise Betriebsdaten des Kraftfahrzeugs beobachten. Beispielsweise können Steueraufgaben, die an das Steuergerät 11 übermittelt werden, und/oder Anforderungsdaten, die angeben, welche andere Fahrzeugkomponente zumindest eine Steuerfunktion des Steuergeräts anfordert, ermittelt werden.

Es kann dann das Ruhezeitintervall 21 prädiziert werden, welches innerhalb des Zeitintervalls 22 liegen kann und eine vorbestimmte Mindestzeitdauer 24 andauern wird oder sogar noch länger dauern wird. Es ist damit sichergestellt, dass während des Ruhezeitintervalls 21 das auszutauschende Softwaremodul 18 nicht benötigt wird und somit der Fahrbetrieb des Kraftfahrzeugs 10 nicht gestört wird, wenn das Softwaremodul 18 während des Ruhezeitintervalls 21 nicht zur Verfügung steht, weil dessen Programmcode oder Softwaremodul durch das neue Softwaremodul 18' ersetzt wird. Zu einem Beginn 25 des Ruhezeitintervalls 21 kann somit ein Softwareupdate des Softwaremoduls 18' in dem Steuermodul 11 vorgenommen werden, durch welche das Softwaremodul 18 ersetzt wird. Danach können dann wieder Steuerdaten 16 durch das neu installierte Softwaremodul 18' erzeugt werden. Der Fahrbetrieb des Kraftfahrzeugs 10 muss somit für das Softwareupdate nicht unterbrochen werden.

Um das Ruhezeitintervall 21 aktiv zu schaffen, kann eine zweite Analyseeinrichtung 26 in dem Steuergerät 11 selbst bereitgestellt sein. Die Analyseeinrichtung 26 kann Berechnungsaufgaben prädizieren und diese vorgezogen durchführen, sodass hierdurch ein Ruhezeitintervall 21 geschaffen werden kann, in welchem zumindest das Softwaremodul 18 keine Berechnungen durchführen muss.

Nach dem Softwareupdate des Softwaremoduls 18' kann eine Schadsoftwareerkennung 27 durchgeführt werden, die sowohl einen Bestandteil im Steuergerät 11 als auch einen Bestandteil in einem anderen Steuergerät, beispielsweise dem Steuergerät der ersten Analyseeinrichtung 12, aufweisen kann. Die von dem neuen Softwaremodul 18' erzeugten Steuerdaten können mittels einer Minoritätsklassifikation daraufhin überprüft werden, ob sie für das Steuergerät 11 typische Steuerdaten darstellen. Andernfalls wird eine Schadsoftware signalisiert.

Bei dem Kraftfahrzeug 10 werden somit mittels einer ersten Analyseeinrichtung 12 (auf Basis einer Machine-Learning-Methode 23) auf Fahrzeugebene (außerhalb des Steuergeräts 11) die nächsten Aktivitäten des Steuergeräts 11 prädiziert. Auf Basis der Prädiktion ist das Softwareupdate oder das Softwareupdate gesteuert, sodass das Softwareupdate keinen Einfluss auf das dynamische Verhalten oder das Fahrverhalten des Kraftfahrzeugs 10 aufweist. Es kann somit während des Fahrbetriebs ein Softwareupdate durchgeführt werden.

Die Funktionalität und Komponenten des Steuergeräts 11 sind in unabhängige Mikrokomponenten, das heißt einzelne Softwaremodule, strukturiert oder aufgeteilt, sodass eine Steuerfunktion einzeln unabhängig von den übrigen Steuerfunktionen ausgetauscht werden kann, indem das entsprechende Softwaremodul unabhängig von den übrigen Softwaremodulen ausgetauscht wird.

Eine zweite Analyseeinrichtung 26 (mit Machine-Learning-Methode) kann auf Steuergeräteebene (das heißt im Steuergerät 11) die vorausliegenden oder zukünftigen Berechnungsaufgaben im Steuergerät 11 prädizieren. Diese zweite Analyseeinrichtung ist dazu verwendbar, auf zumindest einer Implementierungsebene (zum Beispiel Low-Level, wie in einem FPGA, und/oder auf einem höheren Level, zum Beispiel Betriebssystemebene und/oder Middleware-Ebene) eine Prädiktion durchzuführen. Durch eine solche Prädiktion der Berechnungsaufgaben und Vorziehen von deren Berechnung innerhalb des Steuergeräts 11 kann die Berechnungsgeschwindigkeit der Berechnungsaufgaben vergrößert werden und/oder zeitlich vorgezogen werden. Hierdurch kann ein Ruhezeitintervall geschaffen werden, dessen Dauer ausreicht, um das Softwareupdate durchzuführen.

Beide Analyseeinrichtungen können dazu genutzt werden, die Schadsoftware-Erkennung 27 durchzuführen, die es ermöglicht, Schadsoftware (Malware und/oder Cyberattacken) auf der Grundlage einer Minoritätsklassifikation zu erkennen.

Die auf Basis einer Machine-Learning-Methode gesteuerten Updates odes Softwareupdatesen sind hocheffizient und es besteht nicht die Notwendigkeit, das Kraftfahrzeug in einen Ruhemodus oder in einen Parkbetrieb zu überführen, um ein Softwareupdate durchzuführen. Die Sicherheit und Zuverlässigkeit des Kraftfahrzeugs kann durch die Möglichkeit, jederzeit ein Softwareupdate durchzuführen, insbesondere für automatisiertes Fahren vergrößert oder verbessert werden. Durch die Erkennung einer Schadsoftware ist auch das Manipulieren eines Kraftfahrzeugs erschwert. Durch die zügigen oder zeitlich unabhängigen Softwareupdates (kein Parkbetrieb nötig) kann es auch ermöglicht sein, ein Softwaremodul in Abhängigkeit von einer Buchung einer zusätzlichen Steuerfunktion und/oder einer Veränderung einer Steuerfunktion mit unterschiedlichen Ausstattungsmerkmalen bereitzustellen. Beispielsweise kann ein Benutzer für einen vorbestimmten Mietzeitraum, beispielsweise für die Ferien, für zum Beispiel eine Woche oder eine vorbestimmte Anzahl von Wochen oder Tagen oder Stunden die Motorleistung seines Kraftfahrzeugs vergrößern, indem eine entsprechende Steuerfunktion angemietet oder gemietet wird. Diese kann dann durch ein Softwareupdate in dem Kraftfahrzeug bereitgestellt werden. Auch bei einem Mietfahrzeug kann in Abhängigkeit vom aktuell abgeschlossenen Mietvertrag durch ein Softwareupdate das Kraftfahrzeug mit einer im Mietvertrag angegebenen Steuerfunktion oder mehreren Steuerfunktionen ausgestattet werden. Am Ende des Mietvertrags oder bei Beginn eines anderen Mietvertrags kann dann durch ein weiteres Softwareupdate das Kraftfahrzeug auch wieder daran angepasst werden. Das Kraftfahrzeug wird somit zu einem mobilen Container, dessen Funktionalität durch ein Softwareupdate an einen aktuellen Bedarf eines Benutzers angepasst werden kann.

Die erste und die zweite Analyseeinrichtung zusammen und die Unterteilung in unabhängige Softwaremodule (Mikrokomponenten) verbessern somit die Performanz bei einem Softwareupdate. Solche schnellen Softwareupdates können auch zu neuen Geschäftsmodellen führen und/oder Anwendungsfällen führen. So kann z.B. in der eingangs beschriebenen Weise ein Benutzer die Nennleistung des Motors seines Kraftfahrzeugs per Softwareupdate verändern. Die Veränderung des Funktionsumfangs des Kraftfahrzeugs per Softwareupdate kann auch auf einen vorbestimmten Zeitraum begrenzt sein. Der Funktionsumfang kann z.B. auf einen Mietzeitraum begrenzt sein, während welchem ein Benutzer das Kraftfahrzeug mietet. Das Kraftfahrzeug wird somit zum mobilen Container, dessen Funktionsumfang per Softwareupdate umgestellt z.B. in Abhängigkeit von Mietvertragsdaten werden kann, z.B. innerhalb von wenigen Minuten (z.B. weniger als 10 Minuten).

Das Softwareupdate selbst kann auf der Grundlage der an sich bekannten Mechanismen durchgeführt werden, also beispielsweise das Übertragen eines neuen Softwaremoduls 18' über eine Funkverbindung sowie das Installieren eines Softwaremoduls in einem Steuergerät. Zusätzlich kann dann noch die erste Analyseeinrichtung hinzugefügt werden, die die Machine-Learning-Methode bereitstellt. Die erste Analyseeinrichtung kann mit zumindest einem Steuergerät des Kraftfahrzeugs interagieren, um Betriebsdaten zu loggen, woraus dann zumindest ein Fahrbetriebsmuster für die Prädiktion eines Ruhezeitintervalls ermittelt werden kann. Die zweite Analyseeinrichtung mit Machine-Learning-Methode kann dann in jedem Steuergerät 11 bereitgestellt werden, in welchem das beschriebene Softwareupdate durchgeführt werden soll.

Insgesamt zeigen die Beispiele, wie durch die Erfindung in einem Kraftfahrzeug ein schnelles, effizientes und sicheres Update durchgeführt werden kann.

## Patentansprüche

1. Verfahren zum Durchführen eines Softwareupdates in einem Steuergerät (11) eines Kraftfahrzeugs (10), wobei
während eines Fahrbetriebs des Kraftfahrzeugs (10), während das Kraftfahrzeug rollt und/oder ein Motor des Kraftfahrzeugs im Betrieb ist, durch eine erste Analyseeinrichtung (12) des Kraftfahrzeugs (10) für ein vorbestimmtes zukünftiges Zeitintervall (22), in welchem das Steuergerät (11) zum Erzeugen von Steuerdaten (15, 16) betrieben wird, ein Ruhezeitintervall (21), in welchem das Erzeugen der Steuerdaten (15, 16) zumindest eines Softwaremoduls (18) des Steuergeräts (11) während des Fahrbetriebs mindestens für eine vorbestimmte Mindestzeitdauer (24) aufgrund eines dann vorliegenden Fahrzeugzustands unterbrochen ist, prädiziert wird und zu Beginn des Ruhezeitintervalls (21) das Softwareupdate gestartet wird, wobei
zum Erkennen des Ruhezeitintervalls (21) anhand der Betriebsdaten ermittelt wird, welche Steueraufgaben an das Steuergerät (11) übermittelt werden und/oder welche andere Fahrzeugkomponente das zumindest eine Softwaremodul des Steuergeräts (11) anfordert, und
die erste Analyseeinrichtung (12) das Ruhezeitintervall (21) auf der Grundlage einer Machine-Learning-Methode (23) und/oder einer Predictive-Analytics-Methode ermittelt, indem anhand von historischen Betriebsdaten des Kraftfahrzeugs (10) zumindest ein Fahrbetriebsmuster des Kraftfahrzeugs (10) ermittelt und das zumindest eine Fahrbetriebsmuster zum Erkennen des Ruhezeitintervalls (21) wiedererkannt wird, und
zu einem Beginn (25) des Ruhezeitintervalls (21) ein Softwareupdate eines neuen Softwaremoduls (18') in dem Steuergerät (11) vorgenommen wird, durch welches das Softwaremodul (18) ersetzt wird, und danach dann wieder Steuerdaten (16) durch das neu installierte Softwaremodul (18') erzeugt werden, wobei der Fahrbetrieb des Kraftfahrzeugs (10) für das Softwareupdate nicht unterbrochen wird.

2. Verfahren nach Anspruch 1, wobei mehrere Softwaremodule (17, 18) in dem Steuergerät (11) bereitgestellt sind und das Softwareupdate umfasst, dass für zumindest eines der Softwaremodule (18) ein Einzel-Softwareupdate unabhängig von jedem übrigen der Softwaremodule (17) durchgeführt wird, und als Mindestzeitdauer (24) eine Updatezeitdauer für das zumindest eine Softwaremodule (18) zugrunde gelegt wird.

3. Verfahren nach Anspruch 2, wobei zumindest einige der Softwaremodule (17, 18) jeweils eine Mikrokomponente und/oder Mikrofunktion einer Gerätefunktion darstellen.

4. Verfahren nach Anspruch 3, wobei Mikrodienste und/oder eine dienstorientierte Architektur bereitgestellt wird, um embedded Software und/oder Software mit den Mikrokomponenten und/oder Mikrofunktionen bereitzustellen.

5. Verfahren nach einem der vorhergehenden Ansprüche, wobei die erste Analyseeinrichtung (12) durch eine von dem Steuergerät (11) verschiedene Überwachungseinrichtung bereitgestellt wird und die Überwachungseinrichtung das Ruhezeitintervall (21) anhand von Kommunikationsdaten, die zwischen dem Steuergerät (11) und zumindest einer weiteren Fahrzeugkomponente übertragen werden, ermittelt.

6. Verfahren nach einem der vorhergehenden Ansprüche, wobei eine zweite Analyseeinrichtung (26) in dem Steuergerät (11) bereitgestellt wird und die zweite Analyseeinrichtung (26) zukünftig angeforderte Berechnungsaufgaben in dem Steuergerät (11) prädiziert und diese Berechnungsaufgaben vor ihrer jeweiligen Anforderung vorgezogen durchgeführt werden und hierdurch eine das Ruhezeitintervall (21) vergrößernde Idle-Zeit des Steuergeräts (11) bereitgestellt wird, wobei die zweite Analyseeinrichtung (26) die zukünftig angeforderten Berechnungsaufgaben auf der Grundlage einer Machine-Learning-Methode und/oder Predictive-Analytics-Methode ermittelt.

7. Verfahren nach Anspruch 6, wobei eine Implementierung in einem FPGA und/oder auf Betriebssystemebene vorgesehen ist.

8. Verfahren nach einem der vorhergehenden Ansprüche, wobei nach des Softwareupdates eine Schadsoftware-Erkennung (27) mittels einer Minoritätsklassifikation betreffend Steuerdaten (16), die von einem durch das Softwareupdate installierten, neuen Softwaremodul (18') erzeugt werden, durchgeführt wird, wobei die Minoritätsklassifikation überprüft, ob die Steuerdaten (16), die von dem neuen Softwaremodul (18') erzeugt werden, einem oder mehreren vorbestimmten Datenmustern genügen und für den Fall, dass die Steuerdaten (18') in keines der Datenmuster fallen, sie als Steuerdaten (18') einer Schadsoftware klassifiziert werden und signalisiert wird, dass Schadsoftware erkannt wurde.

9. Verfahren nach einem der vorhergehenden Ansprüche, wobei das Softwareupdate eine Erneuerung zumindest eines Softwaremoduls (18) und/oder eine Neuinstallation eines zusätzlichen Softwaremoduls (18') für eine neue Steuerfunktion umfasst.

10. Kraftfahrzeug (10) mit einem Steuergerät (11) zum Erzeugen von Steuerdaten (15, 16),
**dadurch gekennzeichnet, dass**
eine erste Analyseeinrichtung (12) zum Ermitteln eines während eines Fahrbetriebs voraussichtlich eintretenden Ruhezeitintervalls (21) des Steuergeräts (11) bereitgestellt ist und das Kraftfahrzeug (10) dazu eingerichtet ist, ein Verfahren nach einem der vorhergehenden Ansprüche durchzuführen.

## Claims

1. Method for performing a software update in a control device (11) of a motor vehicle (10), wherein
during driving operation of the motor vehicle (10), while the motor vehicle is rolling and/or an engine of the motor vehicle is in operation, for a predetermined future time interval (22), in which the control device (11) is operated to generate control data (15, 16), a rest time interval (21), in which the generation of the control data (15, 16) of at least one software module (18) of the control device (11) is interrupted during the driving operation at least for a predetermined minimum time period (24) due to a then present vehicle condition, is predicated by a first analysis device (12) of the motor vehicle (10) and at the beginning of the rest time interval (21) the software update is started, wherein
for identification of the rest time interval (21), it is determined with reference to the operating data which control tasks are conveyed to the control device (11) and/or which other vehicle components the at least one software module of the control device (11) requests, and
the first analysis device (12) determines the rest period interval (21) on the basis of a machine learning method (23) and/or a predictive analytics method, in that at least one driving operation pattern of the motor vehicle (10) is determined with reference to historical operating data of the motor vehicle (10) and the at least one driving operation pattern is recognised in order to identify the rest time interval (21), and
at a start (25) of the rest time interval (21), a software update of a new software module (18') is carried out in the control device (11), by which the software module (18) is replaced, and thereafter control data (16) are then generated again by the newly installed software module (18'), the driving operation of the motor vehicle (10) not being interrupted for the software update.

2. Method according to claim 1, wherein a plurality of software modules (17, 18) are provided in the control device (11) and the software update comprises that for at least one of the software modules (18) an individual software update is performed independently of each of the rest of the software modules (17), and an update time period for the at least one software module (18) is taken as the minimum time period (24).

3. Method according to claim 2, wherein at least some of the software modules (17, 18) each represent a microcomponent and/or microfunction of a device function.

4. Method according to claim 3, wherein microservices and/or a service-oriented architecture is provided to provide embedded software and/or software with the microcomponents and/or microfunctions.

5. Method according to any one of the preceding claims, wherein the first analysis device (12) is provided by a monitoring device that is different from the control device (11), and the monitoring device determines the rest time interval (21) with reference to communications data that is transmitted between the control device (11) and at least one further vehicle component.

6. Method according to any one of the preceding claims, wherein a second analysis device (26) is provided in the control device (11) and the second analysis means (26) predicates future requested computation tasks in the control device (11) and these computation tasks are performed in advance of their respective request, and thereby an idle time of the control device (11) that increases the rest time interval (21) is provided, wherein the second analysis device (26) determines the future requested computation tasks on the basis of a machine learning method and/or predictive analytics method.

7. Method according to claim 6, wherein an implementation in an FPGA and/or at operating system level is provided for.

8. Method according to any one of the preceding claims, wherein after the software update a malware detection (27) is performed by means of a minority classification concerning control data (16) generated by a new software module (18') installed by the software update, wherein the minority classification checks whether the control data (16) generated by the new software module (18') satisfy one or more predetermined data patterns and, in the event that the control data (18') do not fall into any of the data patterns, they are classified as control data (18') of malware and it is signalled that malware has been identified.

9. Method according to any one of the preceding claims, wherein the software update comprises a renewal of at least one software module (18) and/or a new installation of an additional software module (18') for a new control function.

10. Motor vehicle (10) comprising a control device (11) for generating control data (15, 16),
**characterised in that**
a first analysis device (12) is provided for determining a rest time interval (21) of the control device (11) likely to occur during driving operation, and the motor vehicle (10) is adapted to perform a method according to any one of the preceding claims.

## Revendications

1. Procédé pour la réalisation d'une mise à jour de logiciel dans un dispositif de commande (11) d'un véhicule à moteur (10), dans lequel
pendant la conduite du véhicule à moteur (10), pendant que le véhicule à moteur roule et/ou un moteur du véhicule à moteur est en fonctionnement, un premier moyen d'analyse (12) du véhicule à moteur (10) prédit, pour un intervalle de temps futur (22) prédéfini, durant lequel le dispositif de commande (11) est utilisé pour la génération de données de commande (15, 16), un intervalle de temps de repos (21), durant lequel la génération des données de commande (15, 16) d'au moins un module logiciel (18) du dispositif de commande (11) est interrompue pendant la conduite pour au moins une durée de temps minimale (24) prédéfinie en raison d'un état de véhicule actuel, et la mise à jour de logiciel est lancée au début de l'intervalle de temps de repos (21), dans lequel
pour identifier l'intervalle de temps de repos (21), il est déterminé, à l'aide des données de fonctionnement, quelles tâches de commande sont transmises au dispositif de commande (11) et/ou quel autre composant du véhicule requiert le au moins un module logiciel du dispositif de commande (11), et
le premier moyen d'analyse (12) détermine l'intervalle de temps de repos (21) sur la base d'une méthode d'apprentissage automatique (23) et/ou d'une méthode d'analyse prédictive, en déterminant au moins un modèle de conduite du véhicule à moteur (10) à l'aide de données de fonctionnement historiques du véhicule à moteur (10) et en identifiant à nouveau le au moins un modèle de conduite afin d'identifier l'intervalle de temps de repos (21), et
à un début (25) de l'intervalle de temps de repos (21) est effectuée dans le dispositif de commande (11) une mise à jour de logiciel d'un nouveau module logiciel (18'), par lequel est remplacé le module logiciel (18), puis des données de commande (16) sont à nouveau générées par le module logiciel (18') nouvellement installé, dans lequel la conduite du véhicule à moteur (10) n'est pas interrompue pour la mise à jour de logiciel.

2. Procédé selon la revendication 1, dans lequel plusieurs modules logiciels (17, 18) sont fournis dans le dispositif de commande (11) et la mise à jour de logiciel comprend le fait qu'une mise à jour de logiciel individuelle est effectuée pour au moins un des modules logiciels (18) indépendamment de chacun des autres modules logiciels (17), et une durée de mise à jour pour le au moins un module logiciel (18) est utilisée comme durée de temps minimale (24).

3. Procédé selon la revendication 2, dans lequel au moins certains des modules logiciels (17, 18) représentent respectivement un microcomposant et/ou une microfonction d'une fonction d'appareil.

4. Procédé selon la revendication 3, dans lequel des microservices et/ou une architecture orientée vers les services sont fournis pour mettre à disposition un logiciel intégré et/ou un logiciel avec les microcomposants et/ou les microfonctions.

5. Procédé selon l'une quelconque des revendications précédentes, dans lequel le premier moyen d'analyse (12) est fourni par un dispositif de surveillance différent du dispositif de commande (11) et le dispositif de surveillance détermine l'intervalle de temps de repos (21) à l'aide de données de communication qui sont transmises entre le dispositif de commande (11) et au moins un autre composant de véhicule.

6. Procédé selon l'une quelconque des revendications précédentes, dans lequel un second moyen d'analyse (26) est fourni dans le dispositif de commande (11) et le second moyen d'analyse (26) prédit les tâches de calcul demandées à l'avenir dans le dispositif de commande (11) et ces tâches de calcul sont exécutées de manière anticipée avant leur demande respective et ainsi est fourni un temps d'inactivité du dispositif de commande (11) augmentant l'intervalle de temps de repos (21), dans lequel le second moyen d'analyse (26) détermine les tâches de calcul demandées à l'avenir sur la base d'une méthode d'apprentissage automatique et/ou d'une méthode d'analyse prédictive.

7. Procédé selon la revendication 6, dans lequel une mise en œuvre est prévue dans un FPGA et/ou au niveau d'un système d'exploitation.

8. Procédé selon l'une quelconque des revendications précédentes, dans lequel, après la mise à jour de logiciel, une identification de logiciel malveillant (27) est effectuée au moyen d'une classification de minorité concernant les données de commande (16) générées par un nouveau module logiciel (18') installé via la mise à jour de logiciel, dans lequel la classification de minorité vérifie si les données de commande (16) générées par le nouveau module logiciel (18') satisfont à un ou plusieurs modèles de données prédéterminés et, dans le cas où les données de commande (18') ne relèvent d'aucun des modèles de données, elles sont classées en tant que données de commande (18') d'un logiciel malveillant et il est signalé qu'un logiciel malveillant a été identifié.

9. Procédé selon l'une quelconque des revendications précédentes, dans lequel la mise à jour de logiciel comprend un renouvellement d'au moins un module logiciel (18) et/ou une nouvelle installation d'un module logiciel (18') supplémentaire pour une nouvelle fonction de commande.

10. Véhicule à moteur (10) avec un dispositif de commande (11) pour générer des données de commande (15, 16),
**caractérisé en ce que**
un premier moyen d'analyse (12) est fourni pour déterminer un intervalle de temps de repos (21) du dispositif de commande (11) susceptible de se produire pendant la conduite et le véhicule à moteur (10) est conçu pour mettre en œuvre un procédé selon l'une quelconque des revendications précédentes.
